# EUROPÄISCHE PATENTSCHRIFT

(11) **EP 1 686 037 B1**
(45) Veröffentlichungstag und Bekanntmachung des Hinweises auf die Patenterteilung: **14.04.2010**
(21) Anmeldenummer: 05026554.5
(22) Anmeldetag: 06.12.2005
(51) Int. Cl.: B62B 3/00, B62B 3/02, A01G 9/14

(54) **Bewässerungs- und Transportvorrichtung für Pflanzen**
Device for watering and transporting plants
Dispositif d'arrosage et de transport pour plantes

(30) Priorität: 28.01.2005 DE 102005004749
(43) Veröffentlichungstag der Anmeldung: 02.08.2006
(73) Patentinhaber: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Segel (DE); Trinczek, Reinhold, 21514 Büchen (DE)
(74) Vertreter: Philipp, Matthias

(56) Entgegenhaltungen:
- EP-A- 0 614 794
- DE-A1- 2 204 583
- DE-A1- 2 800 575
- DE-A1- 3 619 262

## Beschreibung

Die Erfindung betrifft eine Bewässerungs- und Transportvorrichtung für Pflanzen nach dem Oberbegriff des Anspruchs 1 und eine Sockelplattform dafür nach dem Oberbegriff des Anspruches 15.

Bewässerungs- und Transportvorrichtungen für Pflanzen, wie sie bspw. zur Auslieferung und Lagerung von Topf- und Gartenpflanzen in Gartenmärkten und ähnlichen Verkaufsstellen verwendet werden, sind bspw. aus der DE 20213719 bekannt. Beim (Rück-)transport von derartigen Vorrichtungen im leeren Zustand stellt sich regelmäßig das Problem, die zahlreichen Lagerungsplattformen, auf denen im Lieferzustand die Pflanzen gestanden hatten, nunmehr in möglichst kompakter, platzsparender Anordnung auf der Sockelplattform bzw. an den Gestellstreben unterzubringen, damit der zur Verfügung stehende Laderaum der hierfür verwendeten Lieferfahrzeuge möglichst gut ausgenutzt wird, und diesen Vorgang in möglichst kurzer Zeit durchzuführen.

Herkömmlicherweise wird hierbei so vorgegangen, daß die einzelnen Lagerungsplattformen in einer dichtestmöglichen Anordnung übereinander in die Gestellstreben eingehängt werden, d.h. so, daß in die Einhängeausnehmungen jeder einzelnen Ebene eine Lagerungsplattform eingehängt wird. Dies ist sehr zeitaufwendig und nutzt den an sich in vertikaler Richtung vorhandenen Platz nicht optimal aus.

Aus DE 28 00 575 C2 ist es an sich bekannt, die Gestellstreben in einer Transportstellung, in der deren Längsschlitze zueinander bzw. nach innen weisen, in die Aufnahmehülsen zu stecken, d.h. in einer um 180° gegenüber der Lagerungsstellung verdrehten Stellung. In dieser Stellung können mehrere Lagerungsplattformen eine nach der anderen von oben auf die Sockelplattform gestapelt werden, wobei die Eingriffs-Endabschnitte nicht mehr in die Einhängeausnehmungen eingehängt werden müssen, sondern in/durch die Längsschlitze ragen und in einem hohlen Innenraum der Gestellstreben aufgenommen sind. Dies führt zu einer Einsparung von Arbeitszeit sowohl bei der Herstellung der Transportposition (Lagerungsplattformen sind auf der Sockelplattform gestapelt) als auch bei dem umgekehrten Vorgang, bei dem die einzelnen Lagerungsplattformen entnommen werden müssen und erneut in an einer Sockelplattform gehaltene Gestellstreben einzuhängen sind, die selbstverständlich zuvor verdreht eingesetzt worden sind bzw. sich in der Lagerungsstellung befinden. Allerdings wurde dieses Stapelverfahren nie praktisch eingesetzt, weil die Halterungselemente der jeweils untersten Lagerungsplattform das gesamte Gewicht aller gestapelten Lagerungsplattformen zu tragen hatten und dieser Belastung nicht standhielten.

Aus der EP 0 614 794 A ist ein Transportgestell mit den wesentlichen Merkmalen des Oberbegriffs des Anspruchs 1 bekannt.

Der Erfindung liegt die Aufgabe zugrunde, hier eine Verbesserung zu schaffen und eine Bewässerungs- und Transportvorrichtung für Pflanzen anzugeben, bei der die Lagerungsplattformen schneller und dichter als bisher und ohne Beschädigungsrisiko in einem Transportzustand angeordnet werden können.

Diese Aufgabe wird in vorrichtungsmäßiger Hinsicht durch eine Bewässerungs- und Transportvorrichtung für Pflanzen nach Anspruch 1 gelöst. Je nach Querschnittsform und Konfiguration der Gestellstreben kann die Lagerungsstellung um einen anderen Winkel gegenüber der Transportstellung versetzt sein, beispielsweise 90°. Bei U- oder C-förmigen Gestellstreben beträgt der Winkel 180°, wenn die Einhängeausnehmungen in den Stegbereichen zwischen den Schenkeln eingearbeitet sind.

Unter "Längsschlitz" wird vorliegend jede Art eines entlang der Länge der Gestellstreben verlaufenden offenen Bereichs, Freiraums oder einer Öffnung verstanden, der eine Aufnahme der Einhängeausnehmungen der Lagerungsplattformen ermöglicht. Eine im Querschnitt L-förmige Gestestellstrebe, in deren einem Schenkel die Einhängeausnehmungen der Reihe nach angeordnet sind, hat somit einen "Längsschlitz" in Form eines Freiraums zwischen ihren Schenkelbereichen, ähnlich wie eine im Querschnitt U- oder C-förmige Gestellstrebe.

Auf der Sockelplattform können eine Anzahl von Lagerungsplattformen übereinander gestapelt sein, von denen jede rechteckig ist und in Eckbereichen jeweils ein Halterungselement aufweist, das einen Eingriffs-Endabschnitt aufweist, der entlang der jeweiligen Schmalseite verlaufen und in Richtung einer jeweils zunächst liegenden Längsseite frei enden kann, wobei die Eingriffs-Endabschnitte jeweils einer Lagerungsplattform in der Lagerungsstellung der Gestellstreben in vier auf gleicher Höhe befindliche Einhängeausnehmungen einsetzbar sind und in der Transportstellung der Gestellstreben in die Längsschlitze ragen.

Für die Erfindung spielt es ersichtlich keine Rolle, ob die Gestellstreben in der Lagerungsstellung so angeordnet sind, daß die Einhängeausnehmungen in Längsrichtung oder in Richtung der Schmalseiten der Sockelplattform zueinander gerichtet sind. In jedem Fall läßt sich durch ein um 180° verdrehtes Einsetzen die erfindungsgemäße vorteilhafte Transportstellung erzielen.

Zweckmäßigerweise ist vorgesehen, daß die Aufnahmehülsen einen quadratischen Aufnahmequerschnitt aufweisen.

Ferner sieht die Erfindung vor, daß jede Aufnahmehülse an ihrem unteren Ende durch ein im Querschnitt ihrem Aufnahmequerschnitt entsprechendes und über das jeweilige untere Ende vorstehendes Verschlußteil abgeschlossen ist, so daß mehrere Sockelplattformen zentriert stapelbar sind.

Außerdem ist bevorzugt vorgesehen, daß die Gestellstreben im Querschnitt im wesentlichen quadratisch ausgebildet sind, d.h., bspw. C-förmig, U-förmig oder auch L-förmig mit jeweils gleich langen Schenkeln bzw. Stegen. Im Falle einer C-Form kann der Längsschlitz bspw. eine Breite haben, die 20% bis 90% der Seitenlänge der Quadratform beträgt, z.B. 50%.

Eine zweckmäßige Ausführungsform zeichnet sich dadurch aus, daß die Sockelplattform unterseitig mit Rollen versehen ist, bspw. mit vier feststehenden Rollen oder mit zwei feststehenden und zwei Lenkrollen.

Vorteilhafterweise ist vorgesehen, daß die Einhängeausnehmungen der Gestellstreben abwechselnd eine erste und eine zweite Form oder Kontur aufweisen, so daß ein horizontales Einhängen einer Lagerungsplattform erleichtert ist.

Es kann vorgesehen sein, daß die jeweils einer Schmalseite der Sockelplattform zugeordneten Gestellstreben an ihren oberen freien Enden paarweise mit je einem U-förmigen Steckbügel verbunden sind.

Die Sockelplattform kann einen Boden und einen wannenartig umlaufenden Rand aufweisen.

Die Sockelplattform kann an ihren Schmalseiten jeweils mit einer Erweiterung versehen sein, die in Längsrichtung zwischen Eckbereichen einer rechteckigen Grundform der Sockelplattform vorsteht. Die Erweiterung kann kreissektor-, trapez- oder rechteckförmig sein.

Außerdem kann innerhalb einer oder beider Erweiterung(en) (jeweils) ein Überlauf angeordnet sein. Der Überlauf kann höheneinstellbar sein, um ein bestimmtes Flüssigkeitsniveau innerhalb der Sockelplattform vorzugeben.

Die mindestens eine Lagerungsplattform kann einen Boden und einen umlaufenden Rand aufweisen, wobei ihr Grundriß bevorzugt im wesentlichen mit dem der Sockelplattform übereinstimmt.

Die Sockelplattform kann mit Zentrierungen für eine darauf zu stapelnde Lagerungsplattform versehen sein. Die Zentrierungen können insbesondere an den Erweiterungen angeordnet sein, und sie können durch an dem Rand innen oder außen fixierte und nach oben darüber vorstehende Stifte oder plattenförmige Elemente gebildet sein.

Bevorzugt ist vorgesehen, daß die mindestens eine Lagerungsplattform in der Transportstellung gegenüber dem Gebrauchszustand umgekehrt, d.h. mit ihrer Oberseite nach unten weisend, auf die Sockelplattform aufgestapelt ist.

Hierin ist ein wesentlicher Vorteil zu sehen, da sich dann in den Lagerungsplattformen kein Regenwasser sammeln kann. Da die Bewässerungs- und Transportvorrichtungen in der Regel im Freien gelagert werden, kann sich bei längerer Lagerzeit durch das Überlaufsystem in jeder Lagerungsplattform Wasser ansammeln. Dies ist sehr unangenehm, wenn die Lagerungsplattformen erneut benötigt werden. Andererseits ist die Lagerung in einem überdachten Bereich sehr kostenintensiv.

Die Erfindung sieht weiterhin vor, daß die mindestens eine Lagerungsplattform unterseitig mit einer Zentrierung für eine in der Transportstellung darüber gestapelte Lagerungsplattform versehen ist, d.h. wenn beide oder alle Lagerungsplattformen umgedreht gestapelt sind. Die Zentrierung kann durch zwischen Schmalseiten verlaufende, unterseitig an dem Boden befestigte, im Querschnitt U- oder V-förmige Verstärkungen gebildet sein, die jeweils in Übergangsbereichen zwischen Eckbereichen und Erweiterung der Lagerungsplattform enden können. Alternativ können derartige Verstärkungen in Querrichtung, also zwischen Längsseiten, vorgesehen sein.

Weiterhin kann vorgesehen sein, daß die Lagerungsplattformen an ihren Einhänge-Endabschnitten mit zwei gegenüberliegenden Ausformungen versehen sind, mit denen sie, wahlweise in einer Gebrauchsstellung oder in einer umgedrehten Abdeckstellung, auf Stege aufleg- und einhängbar sind, die den jeweiligen Längsschlitz der Gestellstreben stellenweise überbrücken. Hierbei ist bevorzugt vorgesehen, daß je Gestellstrebe ein oder zwei benachbarte Stege im Bereich der Endabschnitte der Gestellstrebe angeordnet sind.

Die Erfindung betrifft ferner eine Sockelplattform für eine Bewässerungs- und Transportvorrichtung für Pflanzen, mit einem rechteckigen, im wesentlichen ebenen Boden, an dessen Eckbereichen senkrecht zu dem Boden oder dessen Erstreckungsebene jeweils eine Aufnahmehülse zur Aufnahme einer Gestellstrebe angeordnet ist, wobei sich die Sockelplattform dadurch auszeichnet, daß jede Aufnahmehülse mit einem schlitzartigen, senkrecht zu dem Boden verlaufenden Ausschnitt versehen ist, der von einem freien, von dem Boden entfernten Ende der Aufnahmehülse ausgeht, wobei je zwei Ausschnitte in Richtung einer Längs- oder Schmalseite der Sockelplattform zueinander weisen.

Diese Sockelplattform ist insbesondere zur Verwendung mit vier Gestellstreben und mindestens einer Lagerungsplattform, wie vorstehend beschrieben, vorgesehen.

Bevorzugt weisen die Aufnahmehülsen einen quadratischen Aufnahmequerschnitt auf. Weiterhin kann vorgesehen sein, daß jede Aufnahmehülse an ihrem unteren Ende durch ein im Querschnitt dem Aufnahmequerschnitt entsprechendes und über das jeweilige untere Ende vorstehendes Verschlußteil abgeschlossen ist, so daß mehrere Sockelplattformen zentriert stapelbar sind.

Es ist zweckmäßig, wenn die Sockelplattform unterseitig mit Rollen versehen ist, bspw. mit vier feststehenden Rollen oder mit zwei feststehenden und zwei Lenkrollen.

Die Sockelplattform kann einen wannenartig um den Boden umlaufenden Rand aufweisen. An ihren Schmalseiten kann jeweils eine Erweiterung vorgesehen sein, die in Längsrichtung zwischen Eckbereichen einer rechteckigen Grundform der Sockelplattform vorsteht. Die Erweiterung kann kreissektor-, trapez- oder rechteckförmig sein. Innerhalb einer oder beider Erweiterungen kann (jeweils) ein Überlauf angeordnet sein, der höheneinstellbar sein kann.

Die Sockelplattform kann mit Zentrierungen für eine darauf zu stapelnde Lagerungsplattform versehen sein.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine Bewässerungs- und Transportvorrichtung mit einer Sockel- und zwei Lagerungsplattformen in einer Lagerungsstellung zeigt,
Fig. 2 eine Lagerungsplattform der Vorrichtung nach Fig. 1 zeigt,
Fig. 3 eine Sockelplattform der Vorrichtung nach Fig. 1 zeigt,
Fig. 4 eine erfindungsgemäße Vorrichtung mit Sockelplattform und Gestellstreben zeigt,
Fig. 5 eine perspektivische Teilansicht einer Vorrichtung nach Fig. 4 mit mehreren aufgestapelten Lagerungsplattformen zeigt,
Fig. 6 eine vergrößerte Ansicht eines Eckbereichs der Vorrichtung nach Fig. 5 zeigt,
Fig. 7 eine perspektivische Teilansicht einer erfindungsgemäßen Vorrichtung mit einer größeren Anzahl von Lagerungsplattformen als Fig. 5 und 6 zeigt,
Fig. 8 einen oberen Bereich der Vorrichtung nach Fig. 7 zeigt,
Fig. 9 einen Eckbereich ähnlich Fig. 6 in vergrößertem Maßstab zeigt,
Fig. 10 einen Eckbereich der Sockelplattform der erfindungsgemäßen Vorrichtung zeigt, ohne darin aufgenommene Gestellstrebe,
Fig. 11 eine vergrößerte Teilansicht gemäß Fig. 10 zeigt,
Fig. 12 eine Ansicht eines Eckbereichs der Vorrichtung gemäß Fig. 4 zeigt,
Fig. 13 eine vergrößerte Ansicht gemäß Fig. 12 zeigt, und
Fig. 14 einen Eckbereich gemäß Fig. 11 mit einer Zentrierung zeigt,
Fig. 15 eine alternative Ausführungsform eines Einhänge-Endabschnitts einer Lagerungsplattform zeigt,
Fig. 16 eine alternative Gestellstrebe zeigt,
Fig. 17 die Gestellstrebe nach Fig. 16 im Einsatz zeigt, und
Fig. 18 eine Variante eines Zentrierelements zeigt.

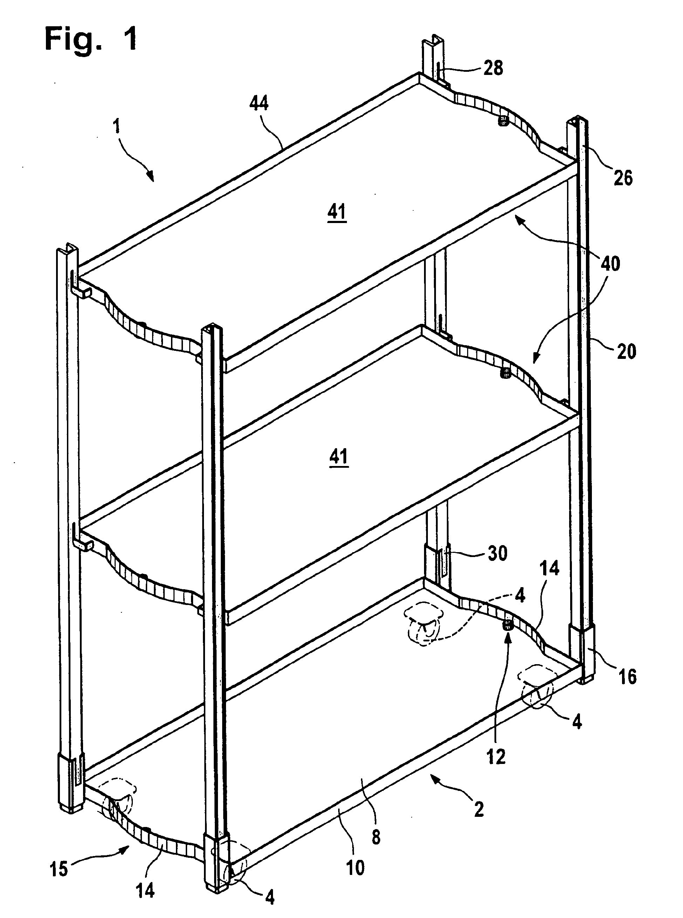

Zunächst sei auf Fig. 1 bis 3 Bezug genommen, in denen eine Ausführungsform der Erfindung dargestellt ist. Die Vorrichtung 1 weist zunächst eine rechteckige Sockelplattform 2 auf, die entweder zur unmittelbaren Auflage auf einem Untergrund oder aber, wie dargestellt, zum Verfahren mit Rollen versehen sein kann, von denen eine in Fig. 1 erkennbar und mit 4 bezeichnet ist. Bspw. können an einer Schmalseite der Sockelplattform zwei feststehende Rollen und an der gegenüberliegenden Schmalseite zwei Schwenkrollen angeordnet sein, um ein leichtes und flexibles Verfahren zu ermöglichen.

Die Sockelplattform 2 weist einen im wesentlichen ebenen Boden 8 sowie einen diesen wangenartig umschließenden Rand 10 auf, so daß eine Aufnahmefläche für Pflanzenbehälter gebildet ist, auf der Wasser oder eine Nährlösung in einer gewissen Höhe stehen kann. Zur Regulierung des Flüssigkeitsstands ist in einer entsprechenden Öffnung im Boden 8 ein einstellbarer Überlauf 12 angeordnet, oder an gegenüberliegenden Schmalseiten des Bodens 8 jeweils ein Überlauf, so daß gelagerte Pflanzen optimal mit Wasser versorgt werden.

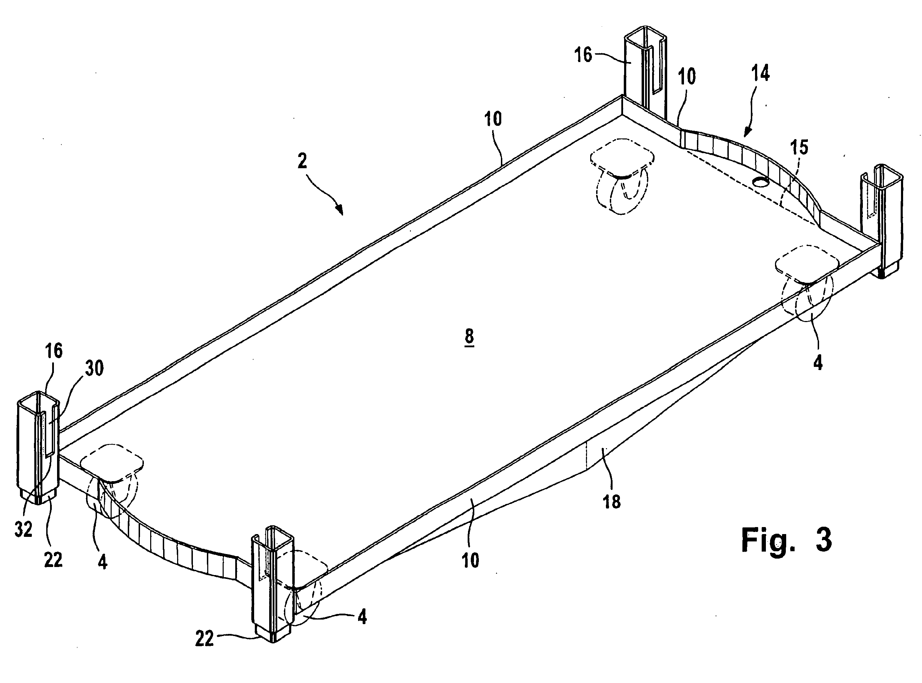

Wie insbesondere Fig. 3 weiter zeigt, ist der Boden 8 bzw. die Sockelplattform 2 nicht genau rechteckförmig ausgebildet, sondern weist an den Schmalseiten jeweils eine bogenförmige Erweiterung 14 auf, innerhalb der der Überlauf 12 angeordnet ist, so daß die eigentliche Rechteckfläche des Bodens 8 für Pflanzgefäße zur Verfügung steht, ohne durch einen Überlauf 12 eingeschränkt zu werden. Da die Erweiterung 14 im wesentlichen der genannten Aufnahme des Überlaufs 12 dient, könnte sie auch eine beliebige andere Formgebung aufweisen, bspw. trapezförmig (wie in der Zeichnung an anderer Stelle dargestellt ist), rechteckförmig oder in sonstiger Form, sofern sichergestellt ist, daß die Rechteckfläche des Bodens, die durch die äußeren Ecken festgelegt ist, ohne Einschränkung durch einen Überlauf 12 zur Verfügung steht, d.h. Überlauf und Erweiterung befinden sich außerhalb der in Fig. 3 gestrichelt angedeuteten Schmalseite 15 der Sockelplattform 2.

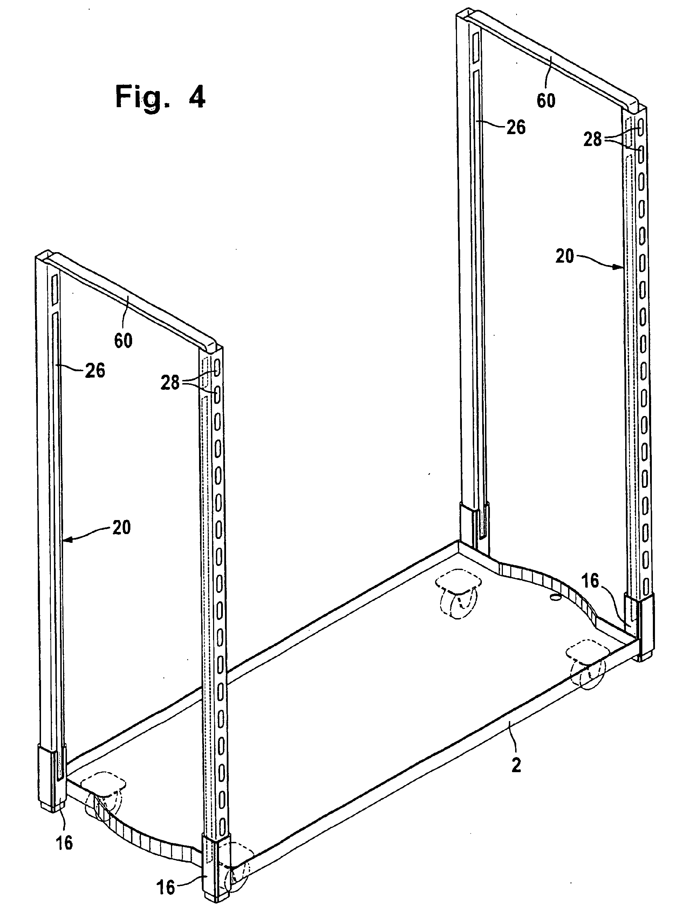

Wie Fig. 1 und insb. Fig. 3 und 4 zeigen, ist an jeder Ecke der Sockelplattform 2 eine Aufnahmehülse 16 vertikal bzw. senkrecht zu dem Boden 8 angeordnet, die zunächst der Aufnahme jeweils einer Gestellstrebe 20 dient. Ein innerer freier Querschnitt der Aufnahmehülsen 16 ist in diesem Beispiel quadratisch, ebenso wie die äußere Querschnittskontur der Gestellstreben 20, wobei die inneren Querschnittsabmessungen der Aufnahmehülsen 16 geringfügig größer sind als die äußeren Querschnittsabmessungen der Gestellstreben 20, so daß eine leichte Steckbarkeit und spielarme Halterung gewährleistet ist.

In einen unteren Bereich einer jeden Aufnahmehülse 16 ist ein Verschlußteil 22 eingesetzt und darin fixiert, bspw. durch Schweißen. Die Aufgabe der Verschlußteile 22 besteht einerseits darin, einen Höhenanschlag für die von oben eingesteckten Gestellstreben 20 zu bilden, so daß sich diese in einer festen Höhe befinden, und andererseits darin, eine Zentrierung zu bilden, um mehrere Sockelplattformen 2, ohne eingesteckte Gestellstreben 20, übereinanderstapeln zu können, wobei dann jeweils ein aus einer Aufnahmehülse 16 überstehender Bereich eines Verschlußteils 22 von oben in eine Aufnahmehülse 16 einer unterhalb angeordneten Sockelplattform 2 eingreift. Die Verschlußteile 22 könnten daher rohrartig offen oder aber über den Querschnitt geschlossen sein.

Die Sockelplattform 2 weist an ihren Längsseiten unten je eine leicht V-förmige Versteifung 18 auf, die einerseitige der Erhöhung der statischen Festigkeit dient und anderseits dazu beiträgt, dass die Sockelplattform bzw. eine beladene, vollständige Bewässerungsvorrichtung (Fig. 1) mit einem Gabelstapler nur so angehoben wird, dass dessen Zinken seitlich außerhalb der Verstärkung angreifen. Die Versteifung könnte alternativ aus einem Rohrstück bestehen.

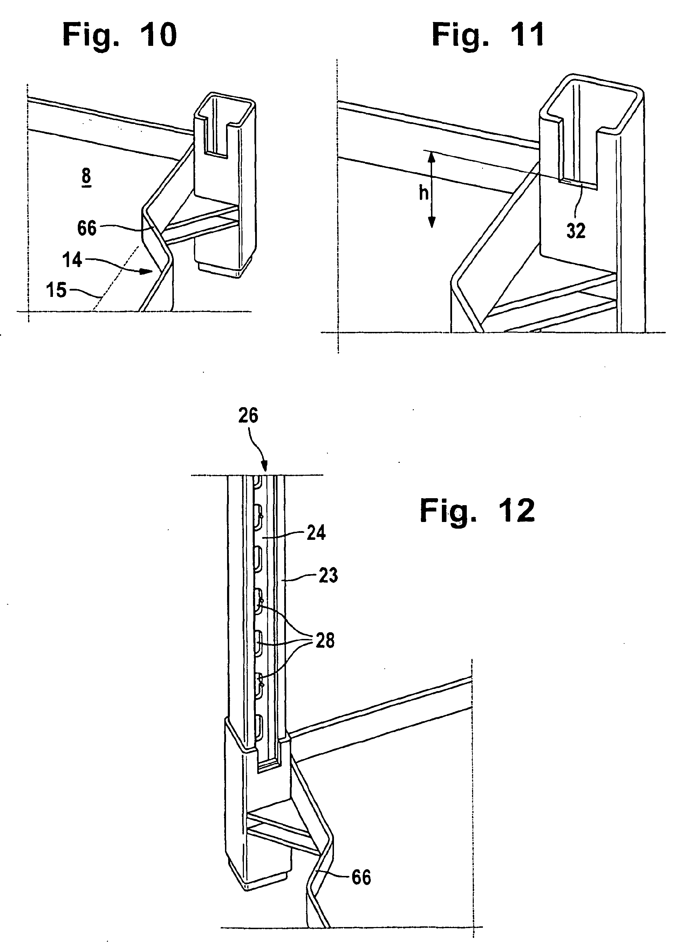

Die Gestellstreben 20 sind in dem Ausführungsbeispiel nach Fig. 4 bis 14 im Querschnitt quadratisch und weisen, mittig in einer Seitenwand 23 (Fig. 12), einen längsverlaufenden, durchgehenden Längsschlitz 26 auf, während in einer dem Längsschlitz 26 gegenüberliegenden Seitenwand 24 der Gestellstrebe eine Anzahl von regelmäßig beabstandeten Einhängeausnehmungen 28 ausgebildet ist. Die Einhängeausnehmungen 28 sind abwechselnd etwas unterschiedlich ausgebildet, im vorliegenden Beispiel dadurch, daß jede zweite Einhängeaufnehmung glatt oval ist, während die dazwischenliegenden Einhängeaufnehmungen oval mit kleinen seitlichen Ausbuchtungen ausgebildet sind. Diese Anordnung hat den Zweck, das Einhängen der nachfolgend noch beschriebenen Lagerungsplattformen in horizontaler Ausrichtung zu erleichtern.

Wie Fig. 3 und 4 und insb. Fig. 11 bis 13 weiter zeigen, sind die Aufnahmehülsen 16 jeweils an ihrer in Richtung der jeweiligen Schmalseite bzw. zu der Erweiterung 14 weisenden Seite mit einem Ausschnitt 30 versehen, dessen unterer Rand 32 in einer bestimmten Höhe oberhalb des Bodens 8 bzw. der Oberkante des Rands 10 liegt, deren Bedeutung nachfolgend noch erläutert wird.

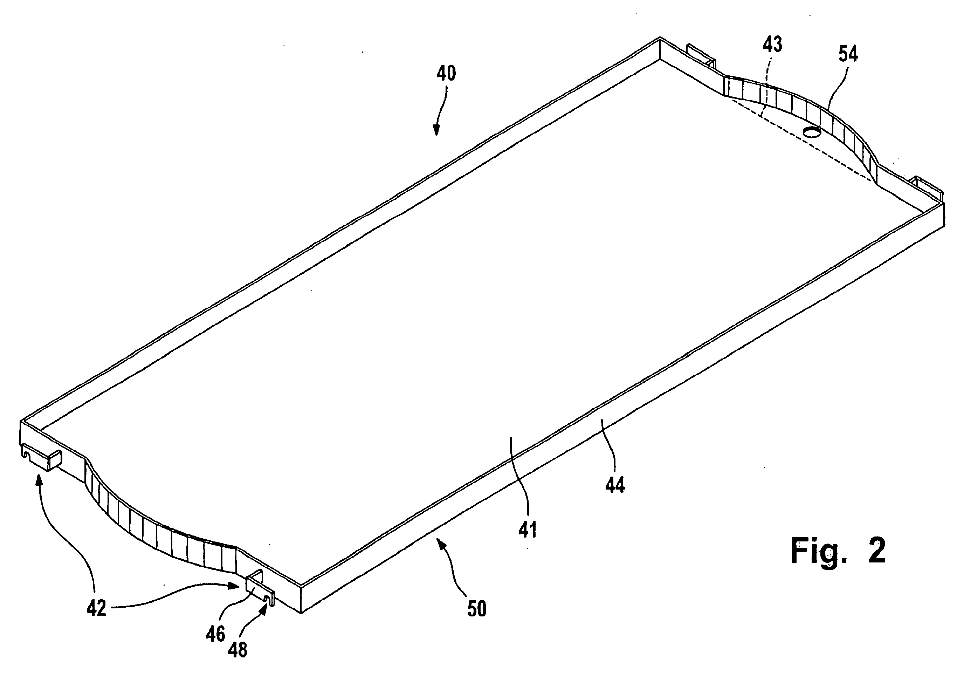

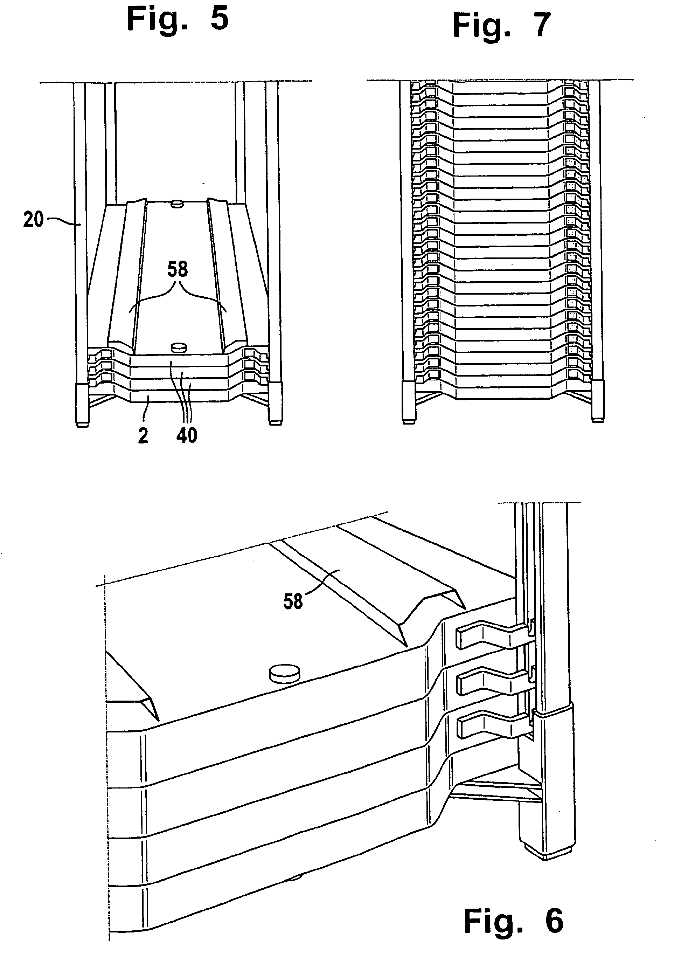

Fig. 5 bis 8 zeigen eine Anordnung, bei der eine Reihe von Lagerungsplattformen 40 übereinander in Gebrauchsstellung auf die Sockelplattform 2 gestapelt sind. Die Lagerungsplattformen 40, von denen eine in Fig. 2 dargestellt ist, haben einen im ganzen rechteckigen Boden 41 und einen diesen wannenartig umschließenden Rand 44 und entsprechen in Form und Größe der Sockelplattform 2, mit dem Unterschied, daß sie zum Einhängen in die Gestellstreben 20 ausgebildet sind und keine Aufnahmehülsen und Rollen aufweisen. Innerhalb von Erweiterungen 54, die hier kreissegmentförmig dargestellt sind, ist ein oder jeweils ein Überlauf angeordnet. Jede Lagerungsplattform weist in ihren Eckbereichen jeweils ein hakenförmiges Halteelement 42 auf, das an den Rand 44 angeschweißt ist. Jedes Halteelement 42 weist einen parallel zu einer Rechteck-Schmalseite 43 der Lagerungsplattform 40 verlaufenden, frei endenden Einhänge-Endabschnitt 46 auf, der mit einem senkrecht zur Erstreckungsebene der Lagerungsplattform 40 angeordneten Einschnitt 48 versehen ist. Der Einhänge-Endabschnitt 46 weist in Richtung auf eine benachbarte Längsseite 50 der Lagerungsplattform 40, d.h. nach außen, so daß er in der in Fig. 5 bis 7 gezeigten Anordnung durch den Längsschlitz 26 in die Gestellstrebe 20 ragt.

Fig. 5 bis 8 zeigen eine Stapelung der Lagerungsplattformen 40 derart, daß jede einzelne Lagerungsplattform umgedreht (in Abdeckstellung) auf der Sockelplattform 2 bzw. einer darunter liegenden Lagerungsplattform abgelegt ist, d.h. der Boden der Lagerungsplattformen weist nach unten. Unterseitig an dem Boden 41 angebrachte, im Querschnitt U-förmige Versteifungsprofile 58 erhöhen die Tragfähigkeit des Bodens bzw. der Lagerungsplattform und dienen mit ihren stirnseitigen Endkanten gleichzeitig als Lagezentrierung für eine von oben aufgelegte, weitere Lagerungsplattform. Die Profile 58 könnten alternativ V-förmigen Querschnitt haben, um die Zentrierwirkung zu verbessern.

Wie man den Darstellungen gemäß Fig. 4 bis 6 im Zusammenhang mit Fig. 1 entnimmt, können in einem ersten Schritt die Gestellstreben 20 gegenüber dem in Fig. 4 dargestellten Zustand in einer um 180° gedrehten Stellung in die Aufnahmehülsen 16 eingesetzt werden, so daß nicht mehr die Längsschlitze 26 zueinander weisen (Transportstellung, gem. Fig. 4 bis 6), sondern die Einhängeausnehmungen 28 zueinander weisen (Fig. 1), wobei diese letztgenannte Stellung als Lagerungsstellung bezeichnet sei. In einem zweiten Schritt können dann Lagerungsplattformen 40 in einer gegenüber Fig. 5 und 6 um 180° (um eine horizontale Achse) gedrehten Stellung, deren Boden 41 dann entsprechend der Positionierung der Sockelplattform 2 nach oben weist, an beliebiger Stelle in Einhängeausnehmungen 28 eingesetzt werden, wobei die Halterungselemente 42 mit ihren Einhänge-Endabschnitten 46 durch die Einhängeausnehmungen in die Gestellstreben 20 greifen und die Einschnitte 48 der Einhänge-Endabschnitte 46 jeweils auf untere Randbereiche der Einhängeausnehmungen 28 greifen, s. Fig. 1, wo die Einhängeausnehmungen 28 lediglich durch Striche angedeutet sind.

Die Erfindung stellt somit eine Sockelplattform für und eine mit einer solchen Sockelplattform gebildete Bewässerungs- und Transportvorrichtung für Pflanzen zur Verfügung, die aus einer Sockelplattform mit vier eingesteckten Gestellstreben besteht, wobei in einer Transportstellung (Fig. 4) der Gestellstreben eine beliebige Anzahl von Lagerungsplattformen auf die Sockelplattform gestapelt sein können. Hierbei führt der Stapelvorgang zu einer wesentlichen Vereinfachung, da die leeren Lagerungsplattformen nicht etwa in die Einhängeausnehmungen 28 eingehängt werden müssen, sondern lose aufeinandergestapelt werden können, weil die Gestellstreben so positioniert sind, daß deren Längsschlitze 26 nach innen weisen und die Einhänge-Endabschnitte lose aufnehmen können. Umgekehrt können in einer Lagerungsstellung der Gestellstreben, in der die Längsschlitze nach außen und die Einhängeausnehmungen zueinander weisen, die Lagerungsplattformen jeweils in der gewünschten Höhe in die Einhängeausnehmungen eingehängt werden.

Die Transportstellung hat somit den Vorteil, daß die Lagerungsplattformen dicht an dicht gestapelt werden können, so daß bei Ausnutzung der vollen Höhe der Gestellstreben eine größere Anzahl aufgenommen werden kann, als dies bei einem Einhängen in die Einhängeausnehmungen der Fall wäre, und zudem der Einlege- bzw. Stapelvorgang wesentlich weniger Zeit erfordert als ein Einhängen.

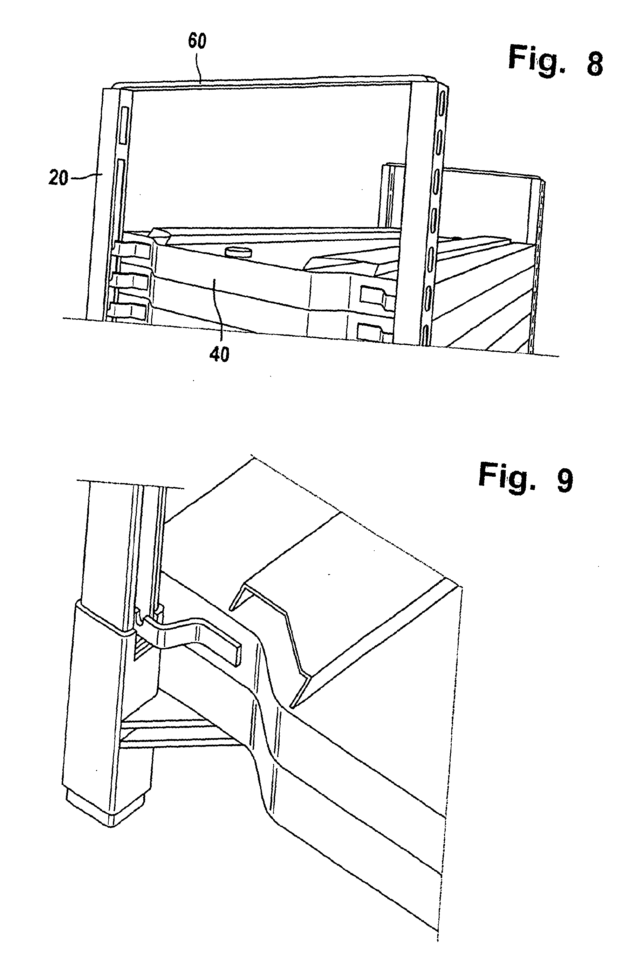

Fig. 8 zeigt eine Vorrichtung, bei der obere Enden der Gestellstreben durch einen U-förmigen Steckbügel 60 miteinander verbunden sind, wie auch in Fig. 4 angedeutet ist, wobei in Längsrichtung der Gestellstreben 20 verlaufende, parallele Schenkel des Steckbügels (nicht sichtbar) in die freien Querschnitte der Gestellstreben 20 greifen und verhindern, daß diese sich auseinanderbewegen, da in einem solchen Fall Halterungselemente von weiter oben liegenden Lagerungsplattformen nicht mehr sicher in den Längsschlitzen der Gestellstreben aufgenommen wären. Derartige Steckbügel sind selbstverständlich im Lagerungszustand nicht erforderlich, da dann die Lagerungsplattformen mit ihren Einschnitten 48 die Gestellstreben 20 in ihrem Abstand zueinander fixieren.

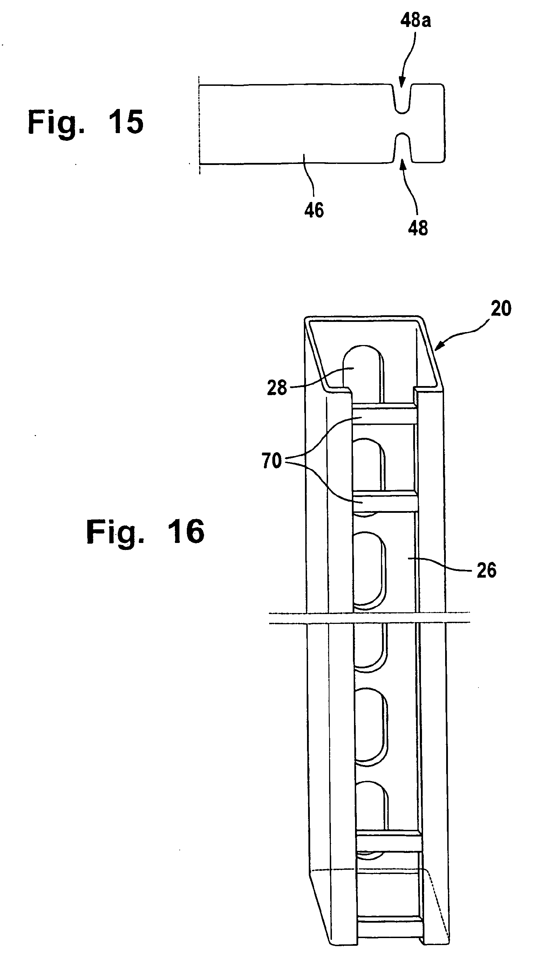

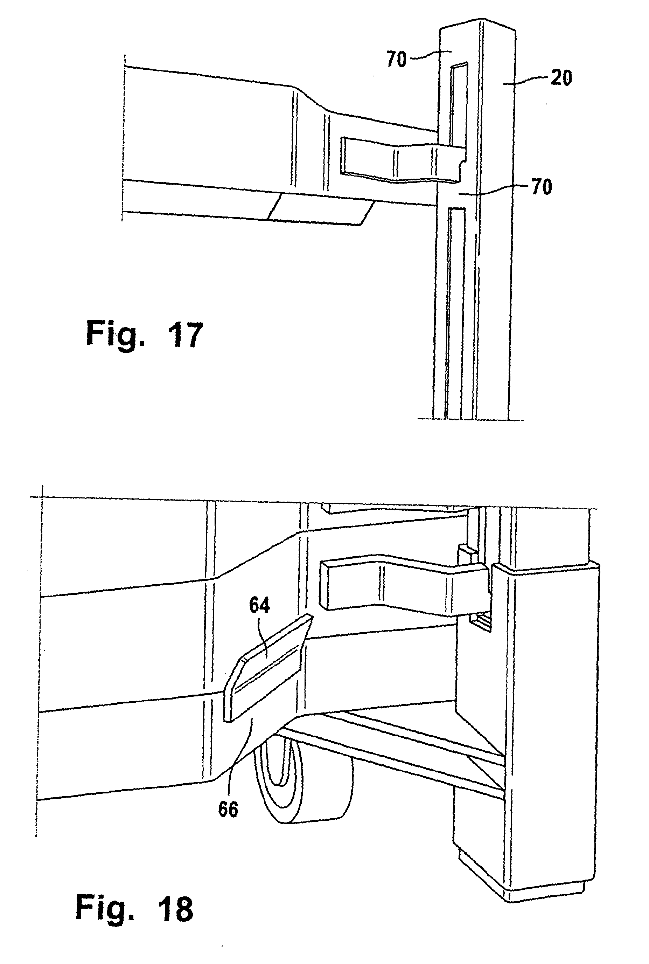

Als Alternative zur Verwendung eines Steckbügels kann vorgesehen sein, daß die Einhänge-Endabschnitte 46 der Lagerungsplattformen nicht mit einem, sondern mit zwei Einschnitten 48, 48a versehen sind, was in Fig. 15 dargestellt ist. Zusätzlich sind die Gestellstreben 20 (Fig. 16) an ihren Endbereichen mit einem oder zwei beabstandeten, den Längeschlitz 26 überbrückenden Stegen 70 versehen, so daß die Möglichkeit besteht, auch in der Transportstellung der Gestellstreben, in der normalerweise keine Lagerungsplattformen eingehängt werden können, eine oberste Lagerungsplattform in umgekehrter Orientierung (Abdeckstellung) auf die zueinander weisenden Stege aufzulegen, d.h. so, daß die zusätzlichen, den normalerweise verwendeten Einschnitten 48 gegenüberliegenden Einschnitte 48a in die Stege 70 eingerastet sind und auf diese Weise verhindern, daß die Gestellstreben sich oben auseinander bewegen können. Dadurch können Steckbügel entfallen. Dieser Sachverhalt ist in Fig. 17 dargestellt, allerdings mit einer Lagerungsplattform, deren Einhänge-Endabschnitte nur einen Einschnitt 48 aufweisen und die sich in ihrer normalen Orientierung (Gebrauchsstellung) befindet.

Wie Fig. 9 zeigt, liegen in der Transportstellung die Halterungselemente 42 bzw. deren Einhänge-Endabschnitte 46 nicht tragend auf den Aufnahmehülsen 16 auf, sondern ragen frei in den Ausschnitt 30, wobei jeweils ein gewisser Abstand zwischen einer Unterkante eines Einhänge-Endabschnitts 46 und dem unteren Rand 32 eines Ausschnitts 30 verbleibt. Dadurch ist sichergestellt, daß die Gesamtlast der insgesamt aufgestapelten Lagerungsplattformen 40 nicht durch die Halterungselemente 42 der untersten Lagerungsplattform aufgenommen werden muß, sondern über deren gesamten Rand 44 an die Sockelplattform 2 übertragen wird.

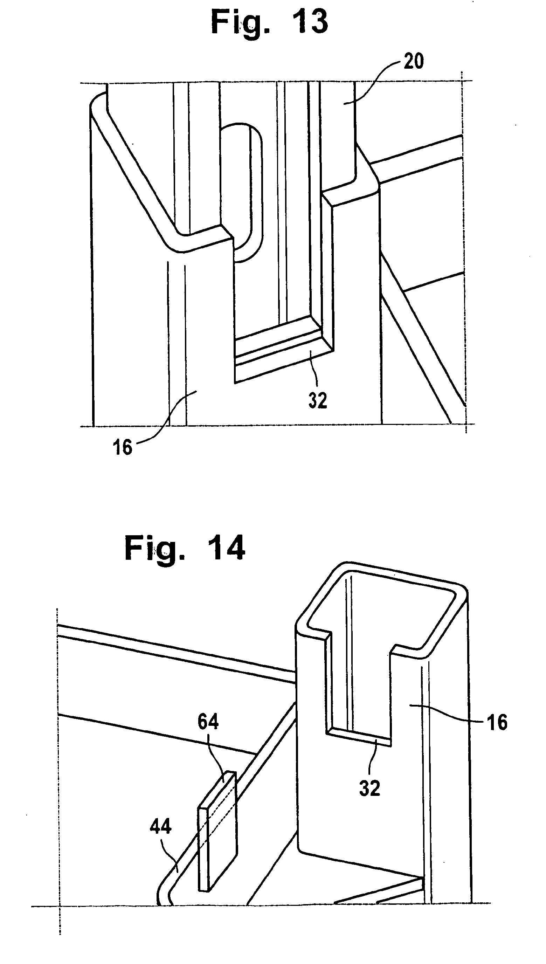

Wie bereits unter Bezugnahme auf Fig. 5 und 6 ausgeführt worden ist, weisen die Lagerungsplattformen 40 eine Zentrierung in Form der Versteifungsprofile 58 auf. Um auch eine zentrierte Position einer untersten, also unmittelbar auf der Sockelplattform 2 aufliegenden Lagerungsplattform sicherzustellen, d.h. eine Position, in der der Rand 44 der Lagerungsplattform im wesentlichen deckungsgleich auf dem Rand 10 der Sockelplattform 2 aufliegt, ohne daß eine seitliche Verschiebung auftritt, können gemäß Fig. 14 an dem Rand 10 der Sockelplattform 2 Zentrierelemente 64 befestigt sein. In dem dargestellten Fall sind an jeder Rechteckseite, d.h. an Längs- und Schmalseiten, der Sockelplattform 2 an dem Rand 10 jeweils zwei plattenförmige Zentrierelemente 64 angeschweißt, im dargestellten Fall von außen, wobei ein Teil des plattenförmigen Zentrierelements 64 nach oben über den Rand 10 vorsteht und somit eine Zentrierung für eine aufgelegte Lagerungsplattform 40 bildet. Der nach oben vorstehende Bereich des Zentrierelements 64 kann, was für eine Variante in Fig. 18 dargestellt ist, leicht nach außen umgebogen sein, um das Auflegen einer Lagerungsplattform zu erleichtern. Alternativ könnte das bzw. die Zentrierelement(e) 64 an der Innenseite des Rands 10 angebracht sein. In Abwandlung dieses Gedankens sind selbstverständlich andere Ausgestaltungen eines Zentrierelements denkbar, bspw. ein stabförmiges, senkrecht zu dem Boden 8 orientiertes Zentrierelement. Bevorzugt ist vorgesehen, lediglich vier Zentrierelemente in einer Ausführung entsprechend Fig. 12 an Bereichen 66 des Rands 10 vorzusehen, die schrägen Trapezschenkeln der Erweiterungen 14 (oder dem bogenförmigen Bereich bei einer Ausführung gemäß Fig. 3) entsprechen, um auf diese Weise mit einer geringeren Anzahl von Zentrierelementen auszukommen (Fig. 18).

Die Erfindung ist vorstehend anhand einer Sockelplattform gemäß Fig. 13 und einer damit gebildeten Bewässerungs- und Transportvorrichtung gemäß Fig. 4 bis 7 erläutert worden, wobei die im Zusammenhang damit verwendeten Lagerungsplattformen 40 mit bezogen auf die Rechteckform in Querrichtung ausgerichteten Einhänge-Endabschnitten 46 versehen sind, die je nach Stellung (Transport- oder Lagerungsstellung) der Gestellstreben 20 in deren Längsschlitze oder Einhängeausnehmungen greifen, die dann in Querrichtung, einander gegenüberstehen bzw. voneinander weg weisen.

In einer alternativen Ausführungsform könnte vorgesehen sein, daß die Lagerungsplattformen mit in Längsrichtung (bezogen auf die rechteckige Grundform, d.h. parallel zu den Längsseiten 50) endenden Einhänge-Endabschnitten versehen sind, wobei dann die Gestellstreben 20 bezogen auf die dargestellte Ausführungsform jeweils um 90° gedreht angeordnet sein müssen, damit wiederum in Transport- bzw. Lagerungsstellung die Längsschlitze bzw. Einhängeausnehmungen zueinander weisen, und zwar bezüglich der Längsrichtung der Vorrichtung. Ebenso müßten bei einer solchen Ausführungsform die Ausschnitte 30 der Aufnahmehülsen 16 so angeordnet sein, daß sie in Längsrichtung gesehen zueinander weisen, also jeweils um 90° gedreht gegenüber der dargestellten Ausführungsform damit sie ihren Zweck erfüllen können, der darin besteht, daß die Einhänge-Endabschnitte einer in Transportstellung zuunterst gestapelten Lagerungsplattform keine Last zu tragen brauchen.

### Bezugszeichenliste

- 1: Bewässerungs- und Transportvorrichtung
- 2: Sockelplattform
- 4: Rolle
- 8: Boden
- 10: Rand
- 12: Überlauf
- 14: Erweiterung
- 15: Schmalseite (von 2)
- 16: Aufnahmehülse
- 18: Versteifung
- 20: Gestellstrebe
- 22: Verschlußteil
- 23, 24: Seitenwand (von 20)
- 26: Längsschlitz
- 28: Einhängeausnehmung
- 30: Ausschnitt
- 32: unterer Rand
- 40: Lagerungsplattform
- 41: Boden
- 42: Halterungselement
- 43: Schmalseite (von 40)
- 44: Rand
- 46: Einhänge-Endabschnitt
- 48: Einschnitt
- 48a: zusätzlicher Einschnitt
- 50: Längsseite
- 54: Erweiterung
- 58: Versteifungsprofil
- 60: Steckbügel
- 64: Zentrierelement
- 66: Trapezschenkelbereich
- 70: Steg

## Patentansprüche

1. Bewässerungs- und Transportvorrichtung für Pflanzen, mit einer rechteckigen Sockelplattform (2), an deren vier Eckbereichen senkrecht dazu jeweils eine Aufnahmehülse (16) angeordnet ist, in der jeweils eine mit einem durchgehenden Längsschlitz (26) und mit einer Reihe von dem Längsschlitz (26) benachbarten und/oder gegenüberliegenden Einhängeausnehmungen (28) versehene Gestellstrebe (20) in einer vertikalen Position aufgenommen ist, wobei die Gestellstreben (20) in einer Transportstellung angeordnet sind, in der die Längsschlitze (26) von zwei einer ersten Seite der Sockelplattform (2) zugeordneten Gestellstreben (20) zueinander und deren Einhängeausnehmungen (28) voneinander weg weisen und die Längsschlitze (26) von zwei einer der ersten Seite gegenüberliegenden zweiten Seite zugeordneten Gestellstreben (20) zueinander und deren Einhängeausnehmungen (28) voneinander weg weisen, und in einer Lagerungsstellung in den Aufnahmehülsen (16) aufnehmbar sind, in der die Einhängeausnehmungen (28) der der ersten Seite zugeordneten Gestellstreben (20) zueinander und deren Längsschlitze (26) voneinander weg weisen und die Einhängeausnehmungen (28) der der zweiten Seite zugeordneten Gestellstreben (20) zueinander und deren Längsschlitze (26) voneinander weg weisen, und wobei auf der Sockelplattform (2) eine Anzahl von Lagerungsplattformen (40) übereinander gestapelt sind, von denen jede rechteckig ist und in Eckbereichen jeweils ein Halterungselement (42) aufweist, das einen frei endenden Einhänge-Endabschnitt (46) aufweist, wobei die Einhänge-Endabschnitte (46) jeweils einer Lagerungsplattform (40) in der Lagerungsstellung der Gestellstreben (20) in vier auf gleicher Höhe befindliche Einhängeausnehmungen (28) einsetzbar sind und in der Transportstellung der Gestellstreben (20) in die Längsschlitze (26) ragen, wobei ein oberer Randbereich jeder Aufnahmehülse (16) in einer solchen Höhe (h) über der Sockelplattform (2) angeordnet ist, daß ein vertikaler Abstand zu den Einhänge-Endabschnitten (46) der Halterungselemente (42) einer untersten aufzustapelnden Lagerungsplattform besteht und diese nicht tragend auf den Aufnahmehülsen (16) aufliegen, **dadurch gekennzeichnet, daß** die Aufnahmehülsen (16) jeweils an einer einander zugekehrten Seite einen Ausschnitt (30) aufweisen, dessen unterer Rand (32) in der Höhe (h) über der Sockelplattform (2) angeordnet ist, und der in der Transportstellung der Gestellstreben deckungsgleich mit deren Längsschlitz verläuft.

2. Vorrichtung nach Anspruch 1, **dadurch gekennzeichnet, daß** die Aufnahmehülsen (16) einen quadratischen Aufnahmequerschnitt aufweisen.

3. Vorrichtung nach einem der vorangehenden Ansprüche, **dadurch gekennzeichnet, daß** jede Aufnahmehülse (16) an ihrem unteren Ende durch ein im Querschnitt ihrem Aufnahmequerschnitt entsprechendes und über das jeweilige untere Ende vorstehendes Verschlußteil (22) abgeschlossen ist, so daß mehrere Sockelplattformen zentriert stapelbar sind.

4. Vorrichtung nach einem der vorangehenden Ansprüche, **dadurch gekennzeichnet, daß** die Gestellstreben (20) im Querschnitt C- oder U-förmig und im wesentlichen quadratisch ausgebildet sind.

5. Vorrichtung nach einem der vorangehenden Ansprüche, **dadurch gekennzeichnet, daß** die Sockelplattform (2) unterseitig mit Rollen (4) versehen ist.

6. Vorrichtung nach einem der vorangehenden Ansprüche, **dadurch gekennzeichnet, daß** die Einhängeausnehmungen (28) der Gestellstreben (20) abwechselnd eine erste und eine zweite Form aufweisen.

7. Vorrichtung nach einem der vorangehenden Ansprüche, **dadurch gekennzeichnet, daß** die Sockelplattform (2) einen Boden (8) und einen wannenartig umlaufenden Rand (10) aufweist.

8. Vorrichtung nach einem der vorangehenden Ansprüche, **dadurch gekennzeichnet, daß** die mindestens eine Lagerungsplattform (40) einen Boden (41) und einen umlaufenden Rand (44) aufweist, wobei ihr Grundriß im wesentlichen mit dem der Sockelplattform (2) übereinstimmt.

9. Vorrichtung nach einem der vorangehenden Ansprüche, **dadurch gekennzeichnet, daß** die Sockelplattform (2) mit Zentrierungen (64) für eine darauf zu stapelnde Lagerungsplattform (40) versehen ist.

10. Vorrichtung nach einem der vorangehenden Ansprüche, **dadurch gekennzeichnet, daß** die mindestens eine Lagerungsplattform (40) in Transportstellung mit ihrer Oberseite nach unten weisend auf die Sockelplattform (2) aufgestapelt ist.

11. Vorrichtung nach Anspruch 10, **dadurch gekennzeichnet, daß** die mindestens eine Lagerungsplattform (40) unterseitig mit einer Zentrierung (58) für eine in Transportstellung darüber gestapelte Lagerungsplattform (40) versehen ist.

12. Vorrichtung nach einem der vorangehenden Ansprüche, **dadurch gekennzeichnet, daß** die Lagerungsplattformen (40) an ihren Einhänge-Endabschnitten (46) mit zwei gegenüberliegenden Ausformungen (48, 48a) versehen sind, mit denen sie, wahlweise in einer Gebrauchsstellung oder in einer umgedrehten Abdeckstellung, auf Stege (70) aufleg- und einhängbar sind, die den jeweiligen Längsschlitz der Gestellstreben stellenweise überbrücken.

13. Vorrichtung nach Anspruch 12, **dadurch gekennzeichnet, daß** je Gestellstrebe (20) ein oder zwei benachbarte Stege (70) im Bereich der Endabschnitte der Gestellstrebe angeordnet sind.

14. Sockelplattform (2) für eine Bewässerungs- und Transportvorrichtung für Pflanzen, insbesondere für eine derartige Vorrichtung nach einem der vorangehenden Ansprüche, mit einem rechteckigen, im wesentlichen ebenen Boden (8), an dessen Eckbereichen senkrecht zu dem Boden (8) oder dessen Erstreckungsebene jeweils eine Aufnahmehülse (16) zur Aufnahme einer Gestellstrebe (20) angeordnet ist, **dadurch gekennzeichnet, daß** jede Aufnahmehülse (16) mit einem schlitzartigen, senkrecht zu dem Boden verlaufenden Ausschnitt (30) versehen ist, der von einem freien, von dem Boden (8) entfernten Ende der Aufnahmehülse (16) ausgeht, wobei je zwei Ausschnitte (30) in Richtung einer Längs- oder Schmalseite der Sockelplattform zueinander weisen.

15. Sockelplattform nach Anspruch 14, **dadurch gekennzeichnet, daß** die Aufnahmehülsen (16) einen quadratischen Aufnahmequerschnitt aufweisen.

16. Sockelplattform nach Anspruch 14 oder 15, **dadurch gekennzeichnet, daß** jede Aufnahmehülse (16) an ihrem unteren Ende durch ein im Querschnitt dem Aufnahmequerschnitt entsprechendes und über das jeweilige untere Ende vorstehendes Verschlußteil (22) abgeschlossen ist, so daß mehrere Sockelplattformen (2) zentriert stapelbar sind.

17. Sockelplattform nach einem der Ansprüche 14 bis 16, **dadurch gekennzeichnet, daß** die Sockelplattform (2) unterseitig mit Rollen (4) versehen ist.

18. Sockelplattform nach einem der Ansprüche 14 bis 17, **dadurch gekennzeichnet, daß** die Sockelplattform (2) einen wannenartig um den Boden (8) umlaufenden Rand (44) aufweist.

19. Sockelplattform nach einem der Ansprüche 14 bis 18, **dadurch gekennzeichnet, daß** an Schmalseiten (15) jeweils eine Erweiterung (14) vorgesehen ist, die in Längsrichtung zwischen Eckbereichen der Sockelplattform vorsteht.

20. Sockelplattform nach einem der Ansprüche 14 bis 19, **dadurch gekennzeichnet, daß** die Sockelplattform (2) mit Zentrierungen (64) für eine darauf zu stapelnde Lagerungsplattform (40) versehen ist.

## Claims

1. Watering and transport device for plants, with a rectangular pedestal platform (2), on four corner regions of which in each case a receiving sleeve (16) is arranged perpendicular thereto, in which receiving sleeve (16) in each case a frame strut (20) provided with a continuous longitudinal slot (26) and with a row of fitting recesses (28) which are adjacent to and/or opposite the longitudinal slot (26) is received in a vertical position, wherein the frame struts (20) are arranged in a transport position in which the longitudinal slots (26) of two frame struts (20) assigned to a first side of the pedestal platform (2) point towards one another and the fitting recesses (28) thereof point away from one another and the longitudinal slots (26) of two frame struts (20) assigned to a second side which is opposite the first side point towards one another and the fitting recesses (28) thereof point away from one another, and can be received in a storage position in the receiving sleeves (16) in which the fitting recesses (28) of the frame struts (20) assigned to the first side point towards one another and the longitudinal slots (26) thereof point away from one another and the fitting recesses (28) of the frame struts (20) assigned to the second side point towards one another and the longitudinal slots (26) thereof point away from one another, and wherein on the pedestal platform (2) a number of storage platforms (40) are stacked on top of one another, of which each is rectangular and has in each case a mounting element (42) in corner regions, which mounting element (42) has a freely ending fitting end portion (46), wherein the fitting end portions (46) in each case of a storage platform (4) can be inserted in the storage position of the frame struts (20) into four fitting recesses (28) which are located at the same height and in the transport position of the frame struts (20) protrude into the longitudinal slots (26), wherein an upper edge region of each receiving sleeve (16) is arranged at such a height (h) above the pedestal platform (2) so that there is a vertical distance to the fitting end portions (46) of the mounting elements (42) of a lowermost storage platform to be stacked up and these lie in a non-supporting manner on the receiving sleeves (16), **characterised in that** the receiving sleeves (16) have a cut-out (30) in each case on a mutually facing side, the lower edge (32) of which is arranged at the height (h) above the pedestal platform (2) and which runs in the transport position of the frame struts congruently with the longitudinal slot thereof.

2. Device according to Claim 1, **characterised in that** the receiving sleeves (16) have a square receiving cross-section.

3. Device according to one of the preceding claims, **characterised in that** each receiving sleeve (16) is terminated at the lower end thereof by a closure part (22) which corresponds in cross-section to the receiving cross-section thereof and projects beyond the respective lower end so that a plurality of pedestal platforms can be stacked in a centred manner.

4. Device according to one of the preceding claims, **characterised in that** the frame struts (20) are formed C- or U-shaped in cross-section and substantially square.

5. Device according to one of the preceding claims, **characterised in that** the pedestal platform (2) is provided on the underside with rollers (4).

6. Device according to one of the preceding claims, **characterised in that** the fitting recesses (28) of the frame struts (20) alternately have a first and second shape.

7. Device according to one of the preceding claims, **characterised in that** the pedestal platform (2) has a base (8) and an edge (10) which is circumferential in a tub-like manner.

8. Device according to one of the preceding claims, **characterised in that** the at least one storage platform (40) has a base (41) and a circumferential edge (44), wherein its plan substantially corresponds to that of the pedestal platform (2).

9. Device according to one of the preceding claims, **characterised in that** the pedestal platform (2) is provided with centrings (64) for a storage platform (40) to be stacked thereupon.

10. Device according to one of the preceding claims, **characterised in that** the at least one storage platform (40) is stacked in the transport position with the upper side thereof pointing downwards to the pedestal platform (2).

11. Device according to Claim 10, **characterised in that** the at least one storage platform (40) is provided on the lower side with a centring (58) for a storage platform (40) stacked thereupon in the transport position.

12. Device according to one of the preceding claims, **characterised in that** the storage platforms (40) are provided at the fitting end portions (46) thereof with two opposite formations (48, 48a) with which they, optionally in a position of use or in a turned round covered position, can be placed or fitted on webs (7) which bridge the respective longitudinal slot of the frame struts in places.

13. Device according to Claim 12, **characterised in that** for each frame strut (20) one or two adjacent webs (70) are arranged in the region of the end portions of the frame strut.

14. Pedestal platform (2) for a watering and transport device for plants, in particular for such a device according to one of the preceding claims, with a rectangular, substantially flat base (8) on the corner regions of which in each case a receiving sleeve (16) is arranged perpendicular to the base (8) or the plane of extension thereof for receiving a frame strut (20), **characterised in that** each receiving sleeve (16) is provided with a slot-type cut-out (30) running perpendicular to the base, which cut-out (30) proceeds from a free end of the receiving sleeve (16) distant from the base (8), wherein in each case two cut-outs (30) in the direction of a longitudinal or narrow side of the pedestal platform point towards one another.

15. Pedestal platform according to Claim 14, **characterised in that** the receiving sleeves (16) have a square receiving cross-section.

16. Pedestal platform according to Claim 14 or 15, **characterised in that** each receiving sleeve (16) is terminated at the lower end thereof by a closure part (22) which corresponds in cross-section to the receiving cross-section and projects beyond the respective lower end so that a plurality of pedestal platforms (2) can be stacked in a centred manner.

17. Pedestal platform according to one of Claims 14 to 16, **characterised in that** the pedestal platform (2) is provided on the underside with rollers (4).

18. Pedestal platform according to one of Claims 14 to 17, **characterised in that** the pedestal platform (2) has an edge (44) which runs around the base (8) in a tub-like manner.

19. Pedestal platform according to one of Claims 14 to 18, **characterised in that** in each case an extension (14) is provided on narrow sides (15), which extension (14) projects in the longitudinal direction between corner regions of the pedestal platform.

20. Pedestal platform according to one of Claims 14 to 19, **characterised in that** the pedestal platform (2) is provided with centrings (64) for a storage platform (40) to be stacked thereupon.

## Revendications

1. Dispositif d'arrosage et de transport pour plantes, avec une plateforme formant socle (2) rectangulaire, aux quatre zones d'angle de laquelle, perpendiculairement à celle-ci, sont disposées chaque fois une douille de réception (16), dans laquelle chaque fois une entretoise de bâti (20), munie d'une fente longitudinale (26) continue et d'une série d'évidements d'accrochage (28) voisins de la fente longitudinale (26) ou opposés, est logée dans une position verticale, les entretoises de bâti (20) étant disposées dans une position de transport, dans laquelle les fentes longitudinales de deux entretoises de bâti (20), associées à un premier côté de la plateforme formant socle (2), sont tournées les unes vers les autres et dont les évidements d'accrochage (28) sont tournés à l'opposé les uns des autres, et les fentes longitudinales (26) de deux entretoises de bâti (20), associées à un deuxième côté, opposé au premier côté, sont tournées les unes vers les autres et dont les évidements d'accrochage (28) sont tournés à l'opposé les uns des autres et sont susceptibles d'être logées dans les douilles de réception (16), dans une position de stockage, dans laquelle les évidements d'accrochage (28) des entretoises de bâti (20) associées au premier côté sont tournés les uns vers les autres et dont les fentes longitudinales (26) sont tournés à l'opposé les unes des autres, et les évidements d'accrochage (28) des entretoises de bâti (20) associées au deuxième côté sont tournés les uns vers les autres et dont les fentes longitudinales (26) sont tournés à l'opposé les unes des autres, et où, sur la plateforme formant socle (2), sont empilées, les unes au-dessus des autres, une pluralité de plateformes de stockage (40), dont chacune est rectangulaire et présente dans les zones d'angle chaque fois un élément de fixation (42), présentant un tronçon d'extrémité d'accrochage (46) s'achevant librement, les tronçons d'extrémité d'accrochage (46), chaque fois d'une plateforme de stockage (40), dans la position de stockage des entretoises de bâti (20), étant susceptibles d'être insérés dans quatre évidements d'accrochage (28) se trouvant à hauteur identique et, dans la position de transport des entretoises de bâti (20), pénétrant dans les fentes longitudinales (26), une zone de bordure supérieure de chaque douille de réception (16) étant disposée à une hauteur (h), au-dessus de la plateforme formant socle (2), telle qu'il y ait un espacement vertical par rapport aux tronçons d'extrémité d'accrochage (46) des éléments de fixation (42) d'une plateforme de stockage, la plus basse, à empiler et que celles-ci ne reposent pas sur les douilles de réception (16) en exerçant un effet porteur, **caractérisé en ce que** les douilles de réception (16) présentent chacune, sur un côté tourné les unes vers les autres, une découpe (30), dont le bord inférieur (32) est disposé à la hauteur (h), au-dessus de la plateforme formant socle (2), et s'étendant, dans la position de transport des entretoises de bâti, en coïncidence avec leur fente longitudinale.

2. Dispositif selon la revendication 1, **caractérisé en ce que** les douilles de réception (16) présentent une section transversale de réception carrée.

3. Dispositif selon l'une des revendications précédentes, **caractérisé en ce que** chaque douille de réception (16) est fermée à son extrémité inférieure par une partie obturatrice (22), dont la section transversale correspond à sa section transversale de réception et faisant saillie de l'extrémité inférieure respective, de manière que plusieurs plateformes formant socle puissent être empilées de manière centrée.

4. Dispositif selon l'une des revendications précédentes, **caractérisé en ce que** les entretoises de bâti (20) sont réalisées avec une section transversale en forme de C ou de U et sensiblement carrée.

5. Dispositif selon l'une des revendications précédentes, **caractérisé en ce que** la plateforme formant socle (2) est munie de roulettes (4) en face inférieure.

6. Dispositif selon l'une des revendications précédentes, **caractérisé en ce que** les évidements d'accrochage (28) des entretoises de bâti (20) présentent alternativement une première et une deuxième forme.

7. Dispositif selon l'une des revendications précédentes, **caractérisé en ce que** la plateforme formant socle (2) présente un fond (8) et un bord (10) faisant le pourtour, en cuvette.

8. Dispositif selon l'une des revendications précédentes, **caractérisé en ce que** la au moins une plateforme de stockage (40) présente un fond (41) et un bord (44) de pourtour, son profil coïncidant sensiblement avec celui de la plateforme formant socle (2).

9. Dispositif selon l'une des revendications précédentes, **caractérisé en ce que** la plateforme formant socle (2) est munie de centrages (64) pour une plateforme de stockage (40) à empiler dessus.

10. Dispositif selon l'une des revendications précédentes, **caractérisé en ce que**, dans la position de transport, la au moins une plateforme de stockage (40) est empilée sur la plateforme formant socle (2) avec sa face supérieure tournée vers le bas.

11. Dispositif selon la revendication 10, **caractérisé en ce que** la au moins une plateforme de stockage (40) est munie, en face inférieure, d'un centrage (58) pour une plateforme de stockage (40) empilée dessus, en position de transport.

12. Dispositif selon l'une des revendications précédentes, **caractérisé en ce que**, dans leurs tronçons d'extrémité d'accrochage (46), les plateformes de stockage (40) sont munies de deux creusements (48, 48a) opposés, à l'aide desquels, tandis qu'elles se trouvent dans une position d'utilisation, ou dans une position de recouvrement retournée, elles sont susceptibles d'être appliquées ou accrochées sur des nervures (70) pontant par endroits la fente longitudinale respective des entretoises de bâti.

13. Dispositif selon la revendication 12, **caractérisé en ce qu'**une ou deux nervures (70) voisines sont disposées dans la zone des tronçons d'extrémité des entretoises de bâti, pour chaque entretoise de bâti (20).

14. Plateforme formant socle (2) pour un dispositif d'arrosage et de transport pour plantes, en particulier pour un tel dispositif selon l'une des revendications précédentes, avec un fond (8) rectangulaire, sensiblement plan, à chacune des zones d'angle duquel est disposée, perpendiculairement au fond (8) ou à son plan d'étendue, une douille de réception (16) pour recevoir une entretoise de bâti (20), **caractérisée en ce que** chaque douille de réception (16) est munie d'une découpe (30) du genre d'une fente, s'étendant perpendiculairement au fond, partant d'une extrémité libre, distante du fond (8), de la douille de réception (16), chaque paire de découpes (30) étant tournées l'une vers l'autre en direction d'un côté longitudinal ou étroit de la plateforme formant socle.

15. Plateforme formant socle selon la revendication 14, **caractérisée en ce que** les douilles de réception (16) présentent une section transversale de réception carrée.

16. Plateforme formant socle selon la revendication 14 ou 15, **caractérisée en ce que** chaque douille de réception (16) est fermée à son extrémité inférieure par une partie obturatrice (22), dont la section transversale correspond à la section transversale de réception et faisant saillie de l'extrémité inférieure respective, de manière que plusieurs plateformes formant socle (2) puissent être empilées de manière centrée.

17. Plateforme formant socle selon l'une des revendications 14 à 16, **caractérisée en ce que** la plateforme formant socle (2) est munie de roulettes (4) en face inférieure.

18. Plateforme formant socle selon l'une des revendications 14 à 17, **caractérisée en ce que** la plateforme formant socle (2) présente un bord (44) en cuvette, faisant le pourtour du fond (8).

19. Plateforme formant socle selon l'une des revendications 14 à 18, **caractérisée en ce qu'**un élargissement (14), faisant saillie dans la direction longitudinale, entre des zones d'angle de la plateforme formant socle, est prévu sur chacun des côtés étroits (15).

20. Plateforme formant socle selon l'une des revendications 14 à 19, **caractérisée en ce que** la plateforme formant socle (2) est munie de centrages (64), pour une plateforme de stockage (40) à empiler sur elle.
